# EUROPEAN PATENT APPLICATION

(11) **EP 1 718 099 A2**
(43) Date of publication of application: **02.11.2006**
(21) Application number: 06290523.7
(22) Date of filing: 24.03.2006
(51) Int. Cl.: H04Q 7/38, H04Q 7/22

(54) **Method for controlling service priority in radio communication network, radio communication system, radio control apparatus, terminal unit and core network**

(30) Priority: 26.04.2005 JP 2005127470
(71) Applicant: Evolium S.A.S., 75008 Paris (FR)
(72) Inventor: Masuda, Hiroyo, Ryugasaki-City, Ibaraki-prefecture (JP)
(74) Representative: Schmidt, Werner Karl

(57) **Abstract**

A method for controlling service priority among plural services in a radio communication network capable of providing plural services to a terminal unit of a subscriber at the same time, comprising the steps of: requesting to a radio control apparatus a service by the terminal unit; assigning a radio band to the service by the radio control apparatus; and wherein, if the assigned radio band is insufficient, the radio control apparatus performs the priority control to plural services by adjusting the radio band to be assigned to each service based on a predetermined standard.

## Description

### [Field of the Invention]

The present invention relates to a method for controlling service priority among plural services in radio communication network, which can provide the plural services including different type services at the same time, such as Universal Mobile Telecommunications System (UMTS). The network is a third generation of mobile telecommunication system. The present invention further relates to a radio communication system, radio control apparatus, terminal unit and core network, which achieve such a method for controlling service priority.

### [Background Art]

For the UMTS, PS domain (packet service) and CS domain (sound service) are available. A subscriber can simultaneously receive plural services including a different type of service, for example, receive a packet service while receiving sound service.

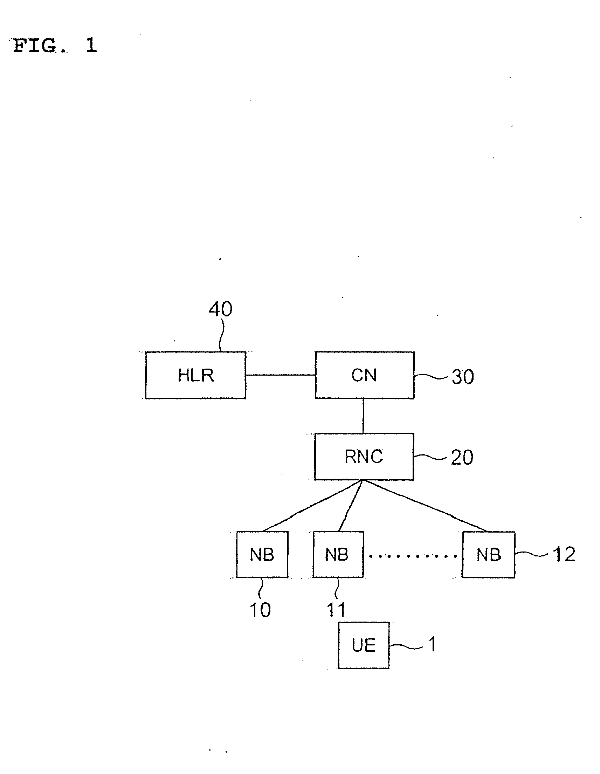

FIG. 1 shows an example of a conventional system configuration of the UMTS.

Here, UE 1 is a terminal unit of subscriber, for example, portable phone terminal. The terminal unit is connected to a radio control apparatus RNC 20 through radio connection with radio base station NB (node B) 10, 11, 12. Further, the radio control apparatus RNC 20 is connected to a core network CN 30 so as to control radio band (radio resource) and radio base stations NB 10, 11, 12. The core network CN 30 is further connected to a home location register HLR 40.

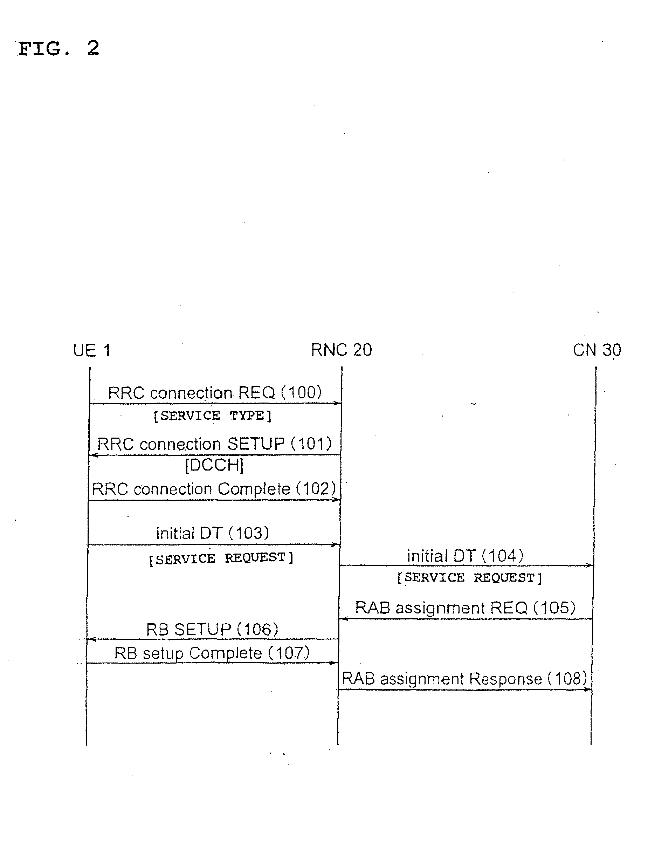

FIG. 2 shows an example of sequence of method for controlling the service in a radio communication network such as current UMTS as shown in FIG. 1. FIG. 2 shows messages exchanged between the terminal unit UE 1, the radio control apparatus RNC 20 and the core network CN 30. In the meantime, messages exchanged between the terminal unit UE 1 and the radio base station NB (node B) 10, 11, 12 and messages exchanged between the radio base station NB (node B) 10, 11, 12 and the radio control apparatus RNC 20 are omitted.

First, "RRC (Radio Resource Control) connection REQ" (RRC connection request), which is a message requesting for a radio band, is sent from the terminal unit UE 1 to the radio control apparatus RNC 20. At that time, the type of service (for example, sound service or packet service) which the terminal unit UE 1 requests is specified (step 100).

The radio control apparatus RNC 20, which has received the "RRC connection REQ" (RRC connection request), sends "RRC connection SETUP" to the terminal unit UE 1 corresponding to the type of the requested service and instructs for setting of DCCH (Dedicated Control Channel) (bi-directional channel used for transmission of individual control information between the terminal unit UE 1 and the radio control apparatus RNC 20) (step 101).

The terminal unit UE 1, which has received the "RRC connection SETUP", sets up DCCH and sends "RRC connection Complete" to the radio control apparatus RNC 20 (step 102).

Next, the terminal unit UE 1 sends "INITIAL DT (Direct Transfer)" to the radio control apparatus RNC 20 and requests for a service (step 103).

The radio control apparatus RNC 20, which has received the "Initial DT", sends that message to the core network CN 30 (step 104).

Next, "RAB assignment REQ" (RAB assignment request) is sent from the core network CN 30 to the radio control apparatus RNC 20 to request for establishment of DCH (Dedicated Channel) (bi-directional channel used for transmission of user data) (step 105) .

The radio control apparatus RNC 20, which has received the "RAB assignment REQ", sends "RB (Radio Bearer) SETUP" to the terminal unit UE 1 to request the terminal unit UE 1 for establishment of DCH (step 106).

The terminal unit UE 1, which has received the "RB SETUP" (RB setup), establishes DHC and sends "RB setup complete" to the radio control apparatus RNC 20 (step 107).

The radio control apparatus RNC 20, which has received the "RB setup complete", sends "RAB assignment Response" to the core network CN 30 (step 108).

Radio band is assigned to the service requested by the terminal unit UE 1 through the radio control base station RNC 20 between the terminal unit UE 1 and the core network CN 30 based on the above-described sequence and the service is provided.

Although the conventional priority control to the service was enabled for each domain, priority control to plural services consisting of adjusting the radio bands assigned to each service for the same subscriber could not be provided. Thus, if the same subscriber intends to receive plural services at the same time, radio bands for those services were insufficient because of convergence in, for example UTRAN (UMTS Terrestrial Radio Access Network), basically, a service requested later was rejected. For example, if a call was received during packet communication, there was a possibility that it might be rejected for the reason that the radio band on the UTRAN side was insufficient even if it was desired to receive the call.

The conventional method for controlling the service priority includes a method called pre-emption. According to this pre-emption, a service requested by a subscriber having a higher priority was taken with preference by cutting a service of other subscriber having a lower priority. However, to receive the priority control based on this pre-emption, the subscriber needs to subscribe in a class having a higher priority in advance.

Further, if packet communication and other service are received at the same time and if the packet communication has a higher data rate, new service to the same subscriber can be received through an empty radio band by dropping that of the packet communication. However, no configuration is offered, in which, when later added communication service is terminated, an empty radio band created by the termination of the communication service is preferentially reassigned to an original subscriber, namely, a subscriber who emptied a radio band by dropping the data rate.

Further, the priority among services provided from the core network CN to the same subscriber could not be specified and the priority of the service could not be specified under a control of the subscriber. If the service is received, it is necessary to define the content of the service (such as voice communication or packet service) and any radio band could not be requested (for example, reservation of a radio band for 100 k) .

### [Disclosure of the Invention]

### [Problem to be solved by the Invention]

The present invention provides a method for controlling service priority in a radio communication network, a radio communication system, a radio control apparatus, a terminal unit and a core network, which can perform priority control to plural services based on a priority specified under the control of a subscriber.

### [Means to solve the Problem]

According to the invention of claim 1, there is provided a method for controlling service priority among plural services in a radio communication network capable of providing plural services to a terminal unit of subscriber at the same time, which is characterized in comprising the steps of:
requesting to a radio control apparatus for a service by the terminal unit; and
assigning a radio band to the service by the radio control apparatus; and
wherein, if the radio band falls insufficient in the step of assigning the radio band, the radio control apparatus performs the priority control to the plural services consisting of adjusting the radio band to be assigned to each service based on a predetermined standard.

According to such a configuration, if the radio band falls insufficient, it is possible to perform the priority control to the plural services consisting of adjusting the radio band to be assigned to each service based on the predetermined standard, without just rejecting a later requested service as doing conventionally.

According to the invention of claim 2, the method comprises further the steps of:
requesting to the radio control apparatus for radio band for plural services by the terminal unit, before requesting for each service; and
reserving the requested radio band in advance by the radio control apparatus; and
the step of requesting to the radio control apparatus for the service includes the step of notifying the priority of the service to the radio control apparatus by the terminal unit, and
if the reserved radio band falls insufficient in the step of assigning the radio band, the radio control apparatus performs the priority control to the plural services based on the notified priority of the service.

According to such a configuration, the radio band for a service can be reserved in advance, and further, if the reserved radio band falls insufficient, the priority control to plural services can be performed based on the priority of the service notified from the subscriber through the terminal unit.

According to the invention of claim 3, the method comprises further the steps of:
requesting to the radio control apparatus for radio band for plural services by the terminal unit, before requesting for each service; and
reserving the requested radio band in advance by the radio control apparatus; and
if the reserved radio band falls insufficient in the step of assigning the radio band, the radio control apparatus requests the terminal unit to restructure the radio band to be assigned to each service so as to not fall insufficient and performs the priority control to the plural services based on the restructured radio band notified from the terminal unit corresponding to the request.

According to such a configuration, the radio band for the service can be reserved in advance and further, if the reserved radio band falls insufficient, the priority control to plural services can be performed based on the restructured radio band for each service assigned by the subscriber through the terminal unit so as to not fall insufficient.

According to the invention of claim 4, the method comprises further the steps of:
storing in advance the priority of each service in a core network to which the radio control apparatus is connected; and
notifying the priority of the service to the radio control apparatus from the core network, when a service is requested from the terminal unit; and
if the radio band falls insufficient in the step of assigning the radio band, the radio control apparatus performs the priority control to plural services based on the priority of the service notified from the core network.

According to such a configuration, if the radio band falls insufficient, the radio control apparatus performs the priority control to plural services based on the priority of the service registered and stored in the core network by a subscriber in advance.

According to the invention of claim 5, the step of requesting to the radio control apparatus for a service comprises notifying the priority of the service to the radio control apparatus from the terminal unit, and
if the radio band falls insufficient in the step of assigning the radio band, the radio control apparatus performs the priority control to plural services based on the notified priority of the service.

. According to such a configuration, if the radio band falls insufficient, the radio control apparatus performs the priority control to plural services based on the priority of the service notified from the terminal unit when a subscriber requests for a service.

According to the invention of claim 6, if the radio band falls insufficient in the step of assigning the radio band, the radio control apparatus requests the terminal unit to notify the priority of each service and performs the priority control to plural services based on the priority of the service notified from the terminal unit corresponding to the request.

According to such a configuration, if the radio band falls insufficient, the radio control apparatus performs the priority control to plural services based on the priority of the service notified from the subscriber through the terminal unit.

According to the invention of claim 7, there is provided a radio communication system capable of providing plural services to a terminal unit of a subscriber at the same time, which is characterized in comprising:
a terminal unit for requesting for plural services; and
a radio control apparatus having a priority control means which, if radio band necessary for requested plural services falls insufficient, performs priority control to the plural services consisting of adjusting the radio band assigned to each service, based on any one of a priority of each service notified from the terminal unit, a restructured radio band assigned to each service notified from the terminal unit so as to make the radio band not fall insufficient, and a priority of each service notified from the core network.

According to such a configuration, if the radio band necessary for requested plural services falls insufficient, it is possible to provide a radio communication system capable of performing the priority control to plural services by adjusting the radio band to be assigned to each service by the radio control apparatus, based on any one of the priority of each service notified from the terminal unit, the restructured radio band assigned to each service notified from the terminal unit so as to make the radio band not fall insufficient; and the priority of each service notified from the core network.

According to the invention of claim 8, there is provided a radio control apparatus capable of providing plural services to the terminal unit of a subscriber at the same time, which is characterized in comprising:
a priority control means which, if radio band necessary for requested services falls insufficient, performs the priority control to the plural services consisting of adjusting the radio band assigned to each service, based on any one of a priority of the service notified from the terminal unit, a restructured radio band assigned to each service notified from the terminal unit so as to make the radio band not fall insufficient, and a priority of the service notified from the core network.

According to such a configuration, it is possible to provide a radio control apparatus capable of performing the priority control to plural services consisting of adjusting the radio band assigned to each service, if radio band necessary for requested services falls insufficient, based on any one of the priority of the service notified from the terminal unit, the restructured radio band assigned to each service notified from the terminal unit so as to make the radio band not fall insufficient, and the priority of the service notified from the core network.

According to the invention of claim 9, there is provided a terminal unit of a subscriber supplied with plural services at the same time from a radio control apparatus which performs the priority control to plural services consisting of adjusting the radio band assigned to each service, when the radio band necessary for the plural services falls insufficient, which is characterized in comprising:
a priority notifying means for notifying the priority of a requested service to the radio control apparatus; or
a band restructure notifying means which restructures a radio band to be assigned to each service so as to not fall insufficient and notifies the restructured radio band to the radio control apparatus.

According to such a configuration, it is possible to provide a terminal unit capable of receiving plural services controlled in terms of the priority, by notifying to the radio control apparatus the priority of the requested service or the restructured radio band assigned to each service so as to not fall insufficient.

According to the invention of claim 10, there is provided a core network connected to a radio control apparatus for performing the priority control to plural services consisting of adjusting the radio band assigned to each service, when the radio band necessary for plural services requested from the terminal unit falls insufficient, based on the priority of each service, which is characterized in comprising:
a storage unit for storing the priority of each service in advance; and
a notifying unit for notifying the priority of the requested service to the radio control apparatus, when the service is requested to the radio control apparatus from the terminal unit.

According to such a configuration, it is possible to provide a core network for notifying the priority of each service to the radio control apparatus, which performs the priority control to the plural services.

Hereinafter, the preferred embodiments of the present invention will be described with reference to the accompanying drawings.

### [Best Mode to Carry out the Invention]

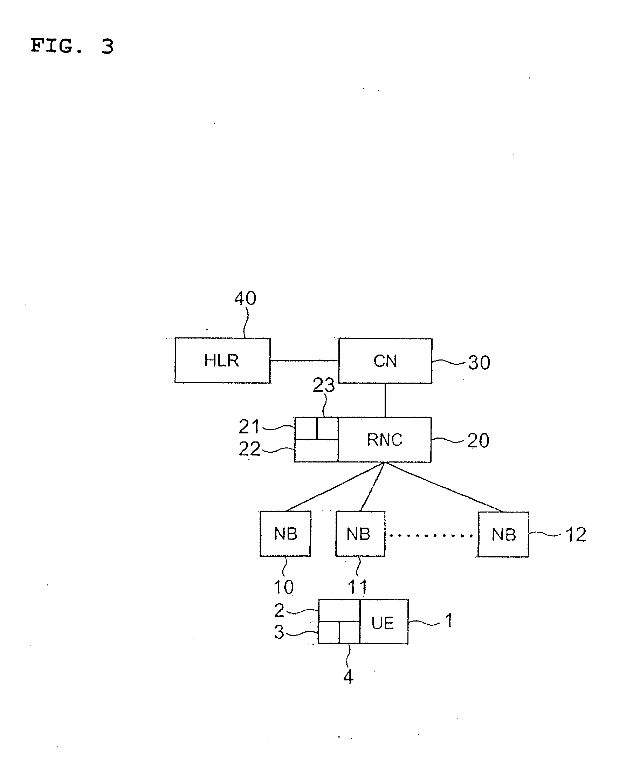

FIG. 3 shows an example of the system configuration of the radio communication network according to a first embodiment of the present invention. The terminal unit UE 1 comprises a band requestingmeans 2 for requesting for a radio band for service, a priority specifying means 3 for specifying the priority of service, and a priority notifying means 4 for notifying a radio control apparatus with the specified priority of the service. The radio control apparatus RNC 20 comprises a band reserving means 21 for reserving a radio band corresponding to a demand of the terminal unit UE 1, a priority storing means 23 for storing the priority of the service and a priority control means 22 for performing priority control to plural services based on the priority of the service stored by the priority storing means 23 if a reserved radio band falls insufficient.

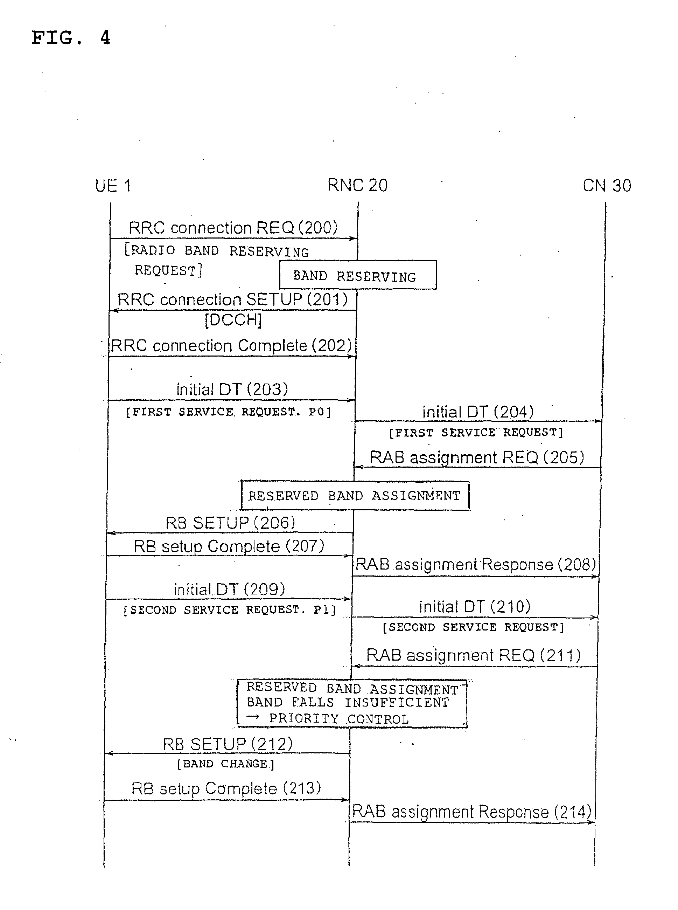

FIG. 4 shows an example of a sequence of the method for controlling service priority according to a first embodiment of the present invention.

First, "RRC connection REQ" is sent from the terminal unit UE 1 to the radio control apparatus RNC 20. At that time, the terminal unit UE 1 requests for reserving a radio band for service using the band requesting means 3 (step 200).

When the radio control apparatus RNC 20 receives "RRC connection REQ", the band reserving means 21 reserves a requested radio band and sends "RRC connection SETUP" to the terminal unit UE 1 to request for setting of DCCH (step 201).

The terminal unit UE 1, which has received the "RRC connection SETUP", sets up DCCH and sends "RRC connection Complete" to the radio control apparatus RNC 20 (step 202).

Next, the terminal unit UE 1 sends "Initial DT" to the radio control apparatus RNC 20 to request for a first service and specifies the priority P0 of the first service by the priority specifying means 3 and then, the priority specified by the priority notifying means 4 is notified to the radio control apparatus RNC 20 (step 203).

The radio control apparatus RNC 20, which has received the "Initial DT", sends that message to the core network CN 30 and stores the priority P0 of the first service in the priority storing means 23 (step 204).

Next, "RAB assignment REQ" is sent from the core network CN 30 to the radio control apparatus RNC 20 to request for establishment of the DCH (step 205).

The radio control apparatus RNC 20, which has received the "RAB assignment REQ", assigns a radio band necessary for the requested first service from reserved radio band and sends "RB SETUP" to the terminal unit UE 1 to instruct the terminal unit UE 1 for establishment of the DCH (step 206).

The terminal unit UE 1, which has received the "RB SETUP", establishes the DHC and sends the "RB setup Complete" to the radio control apparatus RNC 20 (step 207).

The radio control apparatus RNC 20, which has received the "RB setup complete", sends "RAB assignment Response" to the core network CN 30 (step 208).

The terminal unit UE 1 sends "Initial DT" to the radio control apparatus RNC 20 to request for a second service and specifies the priority P1 of the second service by the priority specifying means 3 and the priority specified by the priority notifying means 4 is notified to the radio control apparatus RNC 20 (step 209).

The radio control apparatus RNC 20, which has received the "Initial DT", sends that message to the core network CN 30 and stores the priority P1 of the second service in the priority storing means 23 (step 210).

Next, "RAB assignment REQ" is sent from the core network CN 30 to the radio control apparatus RNC 20 to request for establishment of further DCH (step 211).

The radio control apparatus RNC 20, which has received the "RAB assignment REQ", assigns a radio band necessary for the requested second service from the reserved radio band. If the reserved radio band is sufficient for a radio band necessary for the first service and the second service, the DCH is established for the second service in the same step as the above-described steps 206 to 208. However, if the reserved radio band falls insufficient, the priority control means 22 executes priority control to plural services (in this case, the first service and the second service) based on the priority of each service stored in the priority storing means 23 without simply rejecting the second service requested later. For example, if the priority P0 of the first service is higher than the priority P1 of the second service, the data rate of the second service is dropped (reducing a radio band to be assigned to the second service) or rejected (eliminating a radio band to be assigned to the second service) . If the priority P0 of the first service is lower than the priority P1 of the second service, the data rate of the first service is dropped or rejected. Based on the priority control performed by the priority control means 22, the radio control apparatus RNC 20 sends the "RB SETUP" to the terminal unit UE 1 (step 212).

The terminal unit UE 1, which has received the "RB SETUP" (RB setup), sends the "RB setup Complete" to the radio control apparatus RNC 20 (step 213).

The radio control apparatus RNC 20, which has received the "RB setup Complete", sends the "RAB assignment Response" to the core network CN 30 (step 214).

Thus the priority control to plural services can be performed based on the priority of each service notified from the terminal unit UE 1.

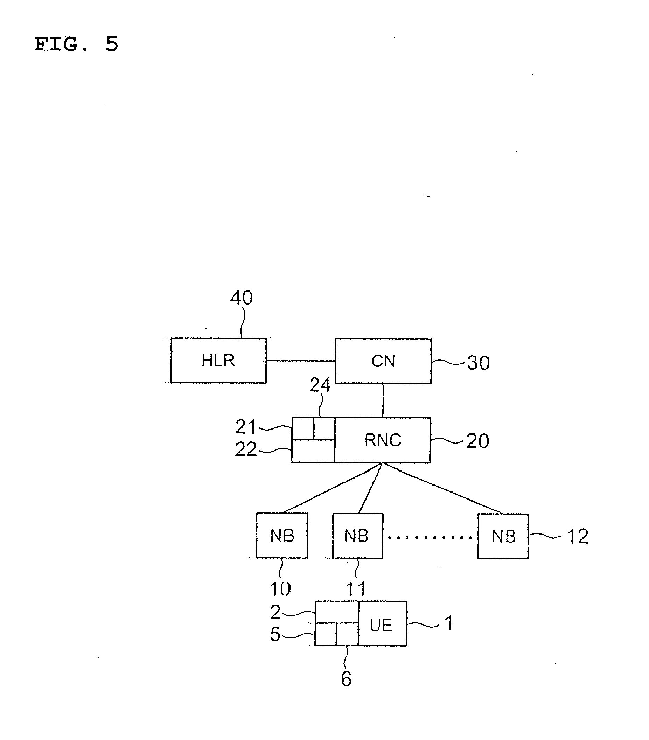

FIG. 5 shows an example of the system configuration of the radio communication network according to a second embodiment of the present invention. The terminal unit UE 1 comprises a band requesting means 2 for requesting for a radio band for a service, a band restructuring means 5 for restructuring a radio band corresponding to the service, and a restructured band notifying means 6 for notifying the restructured radio band to the radio control apparatus RNC 20. The radio control apparatus RNC 20 comprises a band reserving means 21 for reserving a radio band corresponding to a request of the terminal unit UE 1, a band restructure requesting means 24 which if the reserved radio band falls insufficient, requests the terminal unit UE 1 for restructuring of radio band to be assigned to each service so as to not fall insufficient, and a priority control means 22 for performing the priority control of the service.

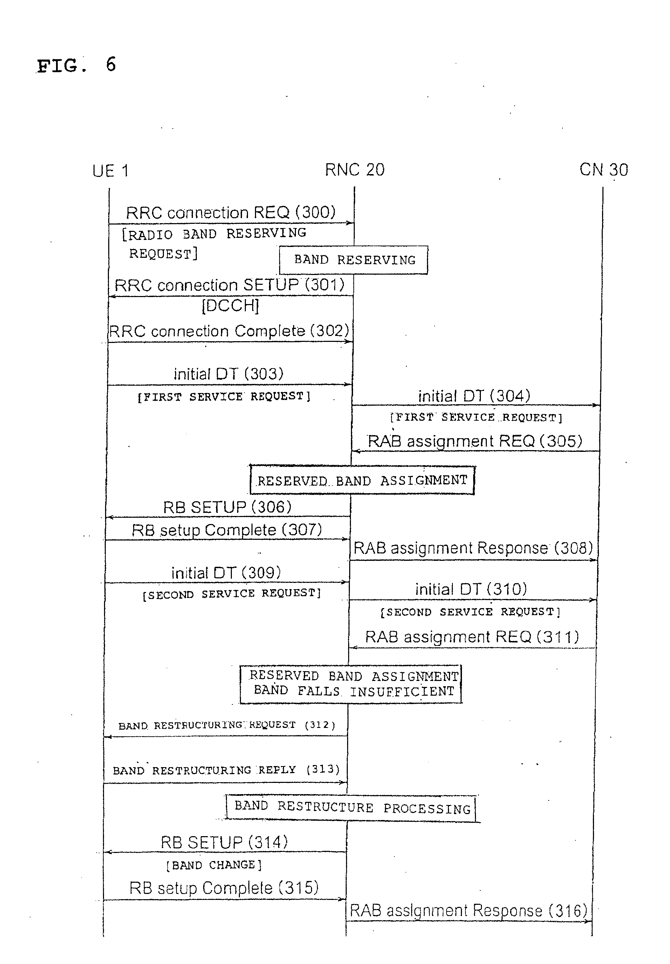

FIG. 6 shows an example of a sequence of the method for controlling service priority according to the second embodiment of the present invention. A difference between the method according to the first embodiment of the present invention shown in FIG. 4 and the sequence of the method according to the second embodiment of the present invention shown in FIG. 6 is as follows.

According to the second embodiment of the present invention, when "Initial DT" is sent from the terminal unit UE 1 to the radio control apparatus RNC 20 in steps 303 and 309, the priority of each service is not notified.

The method for controlling service priority performed by the priority control means 22 of the radio control apparatus RNC 20, if the reserved radio band falls insufficient in steps 312 and 313, is different from that of the first embodiment.

If the reserved radio band falls insufficient, the band restructure instructing means 24 of the radio control apparatus RNC 20 requests the terminal unit UE 1 to restructure the radio band to be assigned to each service so as to not fall insufficient (step 312).

The band restructuring means 5 of the terminal unit UE 1 requested to restructure the radio band, for example, changes the configuration of the radio band so that the data rate of at least one of the first service or the second service is dropped based on an instruction of a subscriber, or performs restructuring of the radio band by canceling a request of any service. The band restructure notifying means 6 notifies the radio control apparatus RNC 20 of such a restructured radio band (step 313).

The priority control means 22 of the radio control apparatus RNC 20 performs restructuring processing based on the restructured radio band notified by the terminal unit and sends "RB SETUP" to the terminal unit UE 1 (step 314). The sequence after this step 314 is the same as the first embodiment.

Thus, if the reserved radio band falls insufficient, the priority control to plural services can be performed based on a radio band assigned to each service by the subscriber so as to make the radio band not fall insufficient.

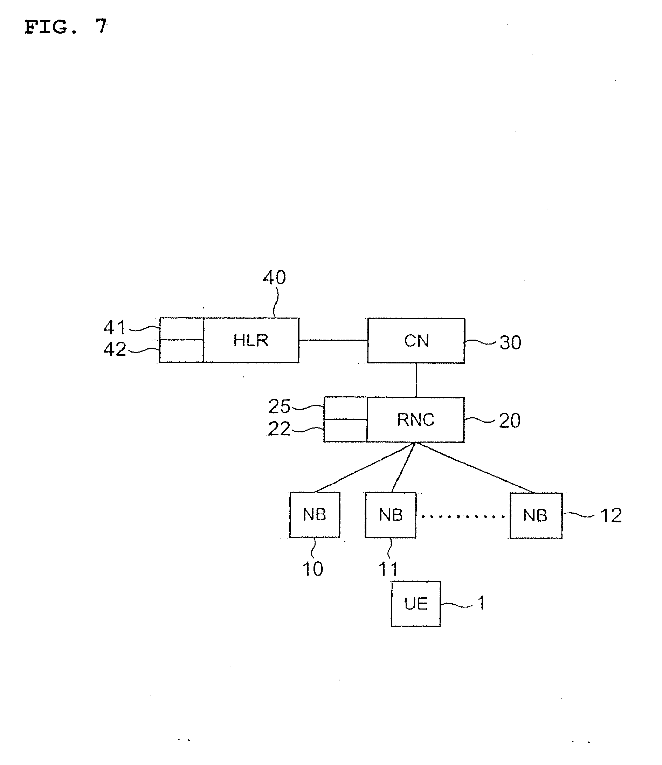

FIG. 7 shows an example of the system configuration of the radio communication network according to a third embodiment of the present invention. The radio control apparatus RNC 20 comprises a priority storing means 25 for storing the priority of a service notified through the core network 30, and a priority control means 22 performing the priority control of the service. A home location register HLR 40 connected to the core network 30 comprises a storage unit 41 for storing the priority of each service registered by the terminal unit UE 1 in advance, and a notifying unit 42 which, when a service is requested from the terminal unit UE 1, notifies the priority of the service to the radio control apparatus RNC 20 through the core network 30.

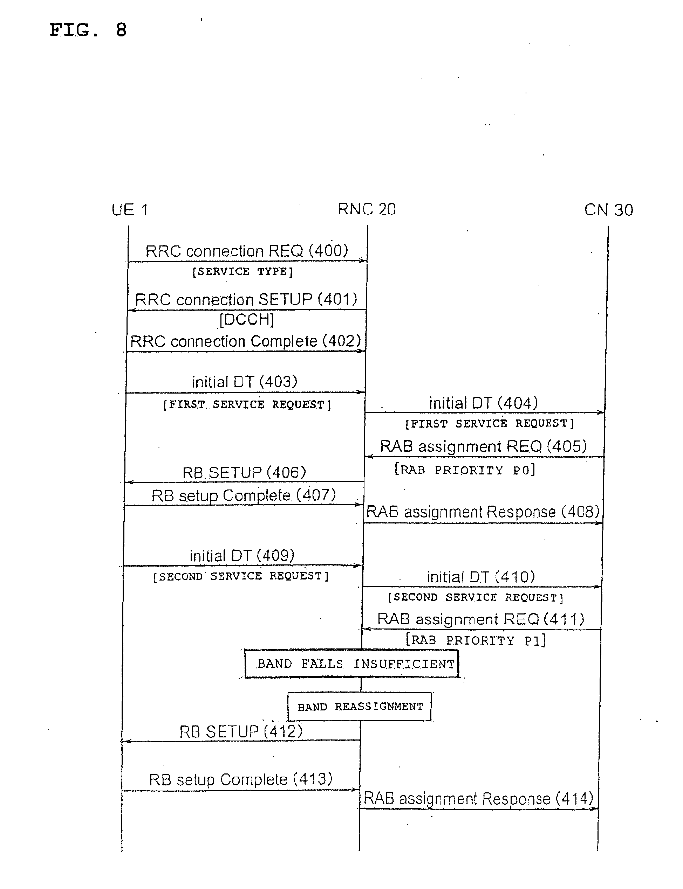

FIG. 8 shows an example of a sequence of the method for controlling service priority according to a third embodiment of the present invention. The difference of the sequence between the service control method of the conventional radio communication network shown in FIG. 2 and the method for controlling service priority of the third embodiment of the present invention shown in FIG. 8 is as follows.

The priority of the service requested by the terminal unit UE 1 can be registered in the storage unit 41 of the home location register HLR 40 in advance.

From step 400 to step 404 are the same as the conventional service control method.

In step 405, when the priority P0 of the first service requested from the terminal unit UE 1 is notified from the notifying unit 41 of the home location register HLR 40 and "RAB assignment REQ" to the radio control apparatus RNC 20 is sent, the core network CN 30 notifies of the priority P0 of this first service. The priority P0 of this first service is stored in the priority storing means 25 of the radio control apparatus RNC 20.

Likewise, in step 411, when the priority P1 of the second service requested from the terminal unit UE 1 is notified from the notifying unit 41 of the home location register HLR 40 and the "RAB assignment REQ" to the radio control apparatus RNC 20 is sent, the core network CN 30 notifies the priority P1 of the second service. The priority P1 of this second service is stored in the priority storing means 25 of the radio control apparatus RNC 20.

If the radioband falls insufficient, the priority control means 22 of the radio control apparatus RNC 20 reads out the priority P0 of the first service and the priority P1 of the second service stored in the priority storing means 25 and performs the priority control between the first and second services based on the priority P0 and P1. For example, if the priority P1 of the second service is higher than the priority P0 of the first service, the data rate of the first service is dropped or stopped and with the second service taken as preference, the "RB (Radio Bearer) SETUP" is sent to the terminal unit UE 1 (step 412).

Thus, if the radio band falls insufficient as described above, the priority control to plural services can be performed based on the priority of each service notified from the core network CN 30 side.

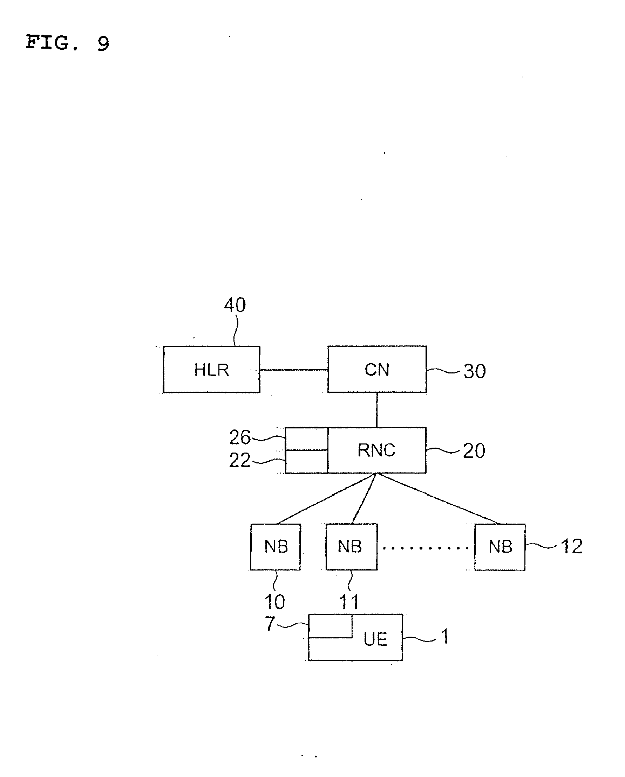

FIG. 9 shows an example of the system configuration of the radio communication network according to a fourth embodiment of the present invention. The terminal unit UE 1 comprises a priority notifying means 7 for notifying the priority to the service. The radio control apparatus RNC 20 comprises a priority storing means 26 for storing the priority of the service notified from the terminal unit UE 1 and a priority control means 22 for performing the priority control to plural services.

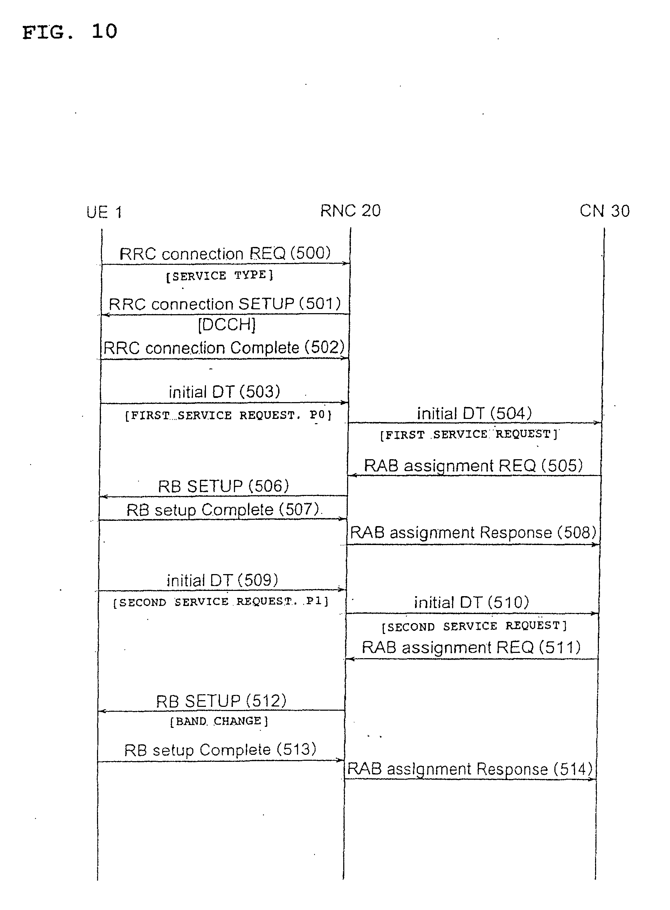

FIG. 10 shows an example of a sequence of the method for controlling service priority according to a fourth embodiment of the present invention. A difference between the sequence of the method of the third embodiment of the present invention shown in FIG. 8 and the sequence of the method of the fourth embodiment of the present invention shown in FIG. 10 is as follows .

In step 503, the terminal unit UE 1 sends the "Initial DT" to the radio control apparatus RNC 20 so as to request for a first service and notifies the priority P0 of the first service by means of the priority notifying means 7. The priority P0 of this first service is stored in the priority storing means 26 of the radio control apparatus RNC 20.

Likewise, in step 509, the terminal unit UE 1 sends the "Initial DT" to the radio control apparatus RNC 20 so as to request for a second service and notifies the priority P1 of the second service by means of the priority notifying means 7. The priority P1 of this second service is stored in the priority storing means 26 of the radio control apparatus RNC 20.

If the radio band falls insufficient, the priority control means 22 of the radio control apparatus RNC 20 performs the service priority control based on the priority P0 of the first service stored in the priority storing means 26 and the priority P1 of the second service. For example, if the priority P1 of the second service is higher than the priority P0 of the first service, by dropping the data rate of the first service or canceling the first service, the second service is taken as preference and the "RB SETUP" is send to the terminal unit UE 1 (step 512).

Thus, if the radio band falls insufficient as described above, the priority control to plural services can be performed based on the priority of the service notified from the terminal unit UE 1.

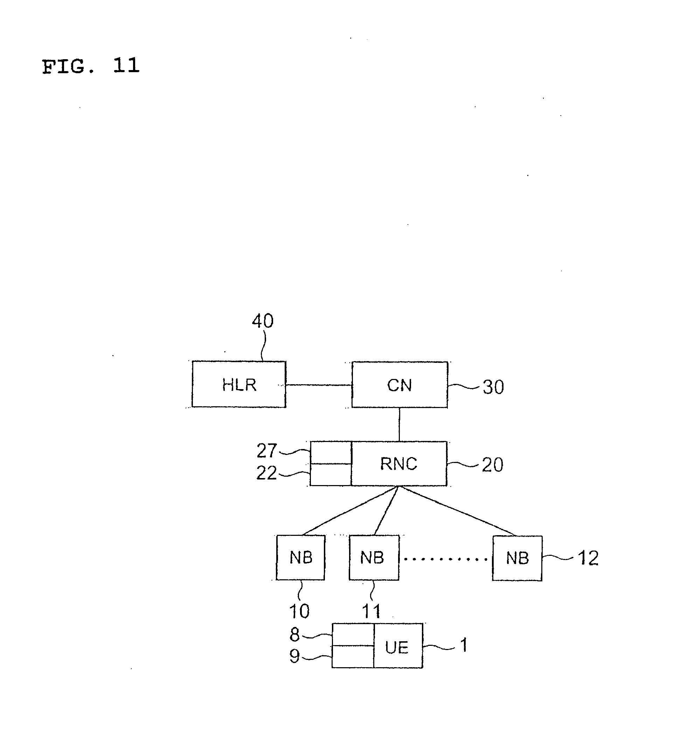

FIG. 11 shows an example of the system configuration of the radio communication network according to a fifth embodiment of the present invention. The radio control apparatus RNC 20 comprises a priority notification requesting means 27 for requesting for notification of the priority of a service to the terminal unit UE 1 if the radio band falls insufficient and, a priority control means 22 for performing the priority control to plural services based on the priority notified from the terminal unit UE 1 . The terminal unit UE 1 comprises a receiving means 7 for receiving a notification request of service priority from the radio control apparatus RNC 20, and a priority replying means 8 for when the receiving means 7 receives the notification request of the priority of the service, replies the priority of the service to the radio control apparatus RNC 20.

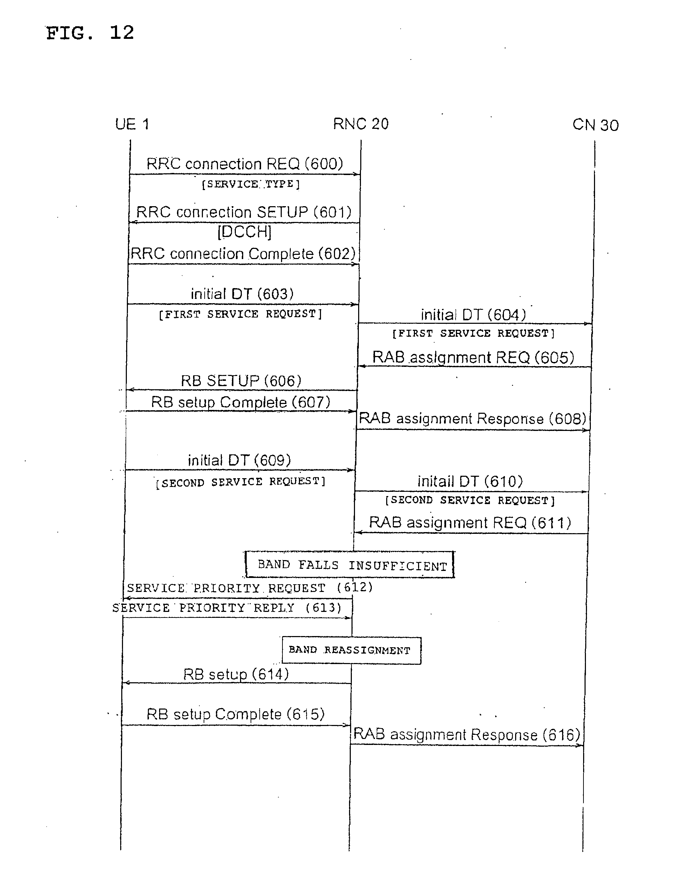

FIG. 12 shows an example of a sequence of the method for controlling service priority according to a fifth embodiment of the present invention. A difference of the sequence between the service control method of the conventional radio communication network shown in FIG. 2 and the method of the fifth embodiment of the present invention shown in FIG. 12 is as follows .

If the radio band falls insufficient in step 612, the radio control apparatus RNC 20 requests the terminal unit UE 1 to notify the priority of each service using the priority notification requesting means 27.

If the receiving means 7 of the terminal unit UE 1 receives the notification request of each service priority from the radio control apparatus RNC 20 in step 613, the priority replying means 8 of the terminal unit UE 1 replies the priority of each service to the radio control apparatus RNC 20.

In step 614, the priority control means 22 of the radio control apparatus RNC 20 performs the priority control to plural services based on the priority of each service notified form the priority replying means 8 of the terminal unit UE 1 and sends the "RB SETUP" to the terminal unit UE 1.

Thus, if the radio band falls insufficient as described above, the priority control to plural services can be performed based on the priority of the service notified from the terminal unit UE 1.

As described above, it is possible to provide a method capable of performing the priority control to plural services by adjusting the radio band to be assigned to each service based on a predetermined standard, without just rejecting a service requested later as conventionally if radio band for plural services falls in sufficient. Further, it is possible to provide a radio communication system, radio control apparatus, terminal unit and core network, which can perform such a method for controlling service priority.

### [Brief Description of the Drawings]

[FIG. 1] FIG. 1 shows an example of a conventional system configuration in UMTS.
[FIG. 2] FIG. 2 shows an example of a sequence of a method for controlling service in a radio communication network such as UMTS.
[FIG. 3] FIG. 3 shows an example of the system configuration of the radio communication network according to a first embodiment of the present invention.
[FIG. 4] FIG. 4 shows an example of a sequence of the method for controlling service priority according to a first embodiment of the present invention.
[FIG. 5] FIG. 5 shows an example of the system configuration of the radio communication network according to a second embodiment of the present invention.
[FIG. 6] FIG. 6 shows an example of a sequence of the method for controlling service priority according to the second embodiment of the present invention.
[FIG. 7] FIG. 7 shows an example of the system configuration of the radio communication network according to a third embodiment of the present invention.
[FIG. 8] FIG. 8 shows an example of a sequence of the method for controlling service priority according to a third embodiment of the present invention.
[FIG. 9] FIG. 9 shows an example of the systemconfiguration of the radio communication network according to a fourth embodiment of the present invention.
[FIG. 10] FIG. 10 shows an example of a sequence of the method for controlling service priority according to a fourth embodiment of the present invention.
[FIG. 11] FIG. 11 shows an example of the system configuration of the radio communication network according to a fifth embodiment of the present invention.
[FIG. 12] FIG. 12 shows an example of a sequence of the method for controlling service priority according to a fifth embodiment of the present invention.

### [Description of reference numerals]

- 1: Terminal unit
- 2: Band request means
- 3: Priority specifying means
- 4, 7: Priority notifying means
- 5: Band restructuring means
- 6: Band restructure notifying means
- 8: Receiving means
- 9: Priority replying means
- 10, 11, 12: Radio base station
- 20: Radio control apparatus
- 21: Band reserving means
- 22: Priority control means
- 23, 25, 26: Priority storing means
- 24: Band restructure requesting means
- 27: Priority notification requesting means
- 30: Core network
- 40: Home location register
- 41: Storage unit
- 42: Notifying unit

## Claims

1. A method for controlling service priority among plural services in a radio communication network capable of providing plural services to a terminal unit of subscriber at the same time, which is **characterized in** comprising the steps of:
requesting to a radio control apparatus for a service by the terminal unit; and
assigning a radio band to the service by the radio control apparatus; and
wherein, if the radio band falls insufficient in the step of assigning the radio band, the radio control apparatus performs the priority control to plural services consisting of adjusting the radio band to be assigned to each service based on a predetermined standard.

2. The method according to claim 1, which is **characterized in** further comprising the steps of:
requesting to the radio control apparatus for radio band for plural services by the terminal unit, before requesting for each service; and
reserving the requested radio band in advance by the radio control apparatus; and
the step of requesting to the radio control apparatus for the service includes the step of notifying the priority of the service to the radio control apparatus by the terminal unit, and
if the reserved radio band falls insufficient in the step of assigning the radio band, the radio control apparatus performs the priority control to the plural services based on the notified priority of the service.

3. The method according to claim 1, which is **characterized in** further comprising the steps of:
requesting to the radio control apparatus for radio band for plural services by the terminal unit, before requesting for each service; and
reserving the requested radio band in advance by the radio control apparatus; and
if the reserved radio band falls insufficient in the step of assigning the radio band, the radio control apparatus requests the terminal unit to restructure the radio band to be assigned to each service so as to not fall insufficient and performs the priority control to the plural services based on the restructured radio band notified from the terminal unit corresponding to the request.

4. The method according to claim 1, which is **characterized in** further comprising the steps of:
storing in advance the priority of each service in a core network to which the radio control apparatus is connected; and
notifying the priority of the service to the radio control apparatus from the core network, when a service is requested from the terminal unit; and
if the radio band falls insufficient in the step of assigning the radio band, the radio control apparatus performs the priority control to plural services based on the priority of the service notified from the core network.

5. The method according to claim 1,
wherein the step of requesting to the radio control apparatus for the service comprises notifying the priority of the service to the radio control apparatus from the terminal unit, and
if the radio band falls insufficient in the step of assigning the radio band, the radio control apparatus performs the priority control to plural services based on the notified priority of the service.

6. The method according to claim 1,
wherein if the radio band falls insufficient in the step of assigning the radio band, the radio control apparatus requests the terminal unit to notify the priority of each service and performs the priority control to plural services based on the priority of the service notified from the terminal unit corresponding to the request.

7. A radio communication system capable of providing plural services to a terminal unit of a subscriber at the same time, which is **characterized in** comprising:
a terminal unit for requesting for plural services; and
a radio control apparatus having a priority control means which, if radio band necessary for requested plural services falls insufficient, performs priority control to the plural services consisting of adjusting the radio band assigned to each service, based on any one of a priority of each service notified from the terminal unit, a restructured radio band assigned to each service notified from the terminal unit so as to make the radio band not fall insufficient, and a priority of each service notified from the core network.

8. A radio control apparatus capable of providing plural services to the terminal unit of a subscriber at the same time, which is **characterized in** comprising:
a priority control means which, if radio band necessary for requested services falls insufficient, performs the priority control to the plural services consisting of adjusting the radio band assigned to each service, based on any one of a priority of the service notified from the terminal unit, a restructured radio band assigned to each service notified from the terminal unit so as to make the radio band not fall insufficient, and a priority of the service notified from the core network.

9. A terminal unit of a subscriber supplied with plural services at the same time from a radio control apparatus which performs the priority control to plural services consisting of adjusting the radio band assigned to each service, when the radio band necessary for the plural services falls insufficient, which is **characterized in** comprising:
a priority notifying means for notifying the priority of a requested service to the radio control apparatus; or
a band restructure notifying means which restructures a radio band to be assigned to each service so as to not fall insufficient and notifies the restructured radio band to the radio control apparatus.

10. A core network connected to a radio control apparatus for performing the priority control to plural services consisting of adjusting the radio band assigned to each service, when the radio band necessary for plural services requested from the terminal unit falls insufficient, based on the priority of each service, which is **characterized in** comprising:
a storage unit for storing the priority of each service in advance; and
a notifying unit for notifying the priority of the requested service to the radio control apparatus, when the service is requested to the radio control apparatus from the terminal unit.
